Europäisches Patentamt

European Patent Office

Office européen des brevets

(19)

(11) Numéro de publication: **0 230 193 B1**

## (12) FASCICULE DE BREVET EUROPEEN

(45) Date de publication du fascicule du brevet:
**27.09.89**

(21) Numéro de dépôt: **86402899.8**

(22) Date de dépôt: **22.12.86**

(51) Int. Cl.⁴: **F23L 7/00**, F23L 15/04, B01D 53/22, F24H 1/10, F24H 1/44

(54) **Système de chauffage permettant l'enrichissement en vapeur d'eau de l'air de combustion fourni à un générateur de chaleur.**

(30) Priorité: **23.12.85 FR 8519055**

(43) Date de publication de la demande:
**29.07.87 Bulletin 87/31**

(45) Mention de la délivrance du brevet:
**27.09.89 Bulletin 89/39**

(84) Etats contractants désignés:
**AT BE CH DE ES GB GR IT LI LU NL SE**

(56) Documents cités:
**DE-A- 3 344 917**
**FR-A- 2 363 057**
**FR-A- 2 555 711**
**US-A- 3 739 553**

(73) Titulaire: **GAZ DE FRANCE, 23, rue Philibert Delorme, F-75017 Paris(FR)**

(72) Inventeur: **Turbet, Claude, 5 Allée des Renardeaux, F-95350 Saint-Brice S/Foret(FR)**
Inventeur: **Meyer, Michel, 4112 rue Saint-André, Montreal 99401 H2L 3W3(CA)**

(74) Mandataire: **Durand, Yves Armand Louis et al, Cabinet Z. Weinstein 20, Avenue de Friedland, F-75008 Paris(FR)**

## Description

La présente invention a essentiellement pour objet un système de chauffage permettant l'enrichissement en vapeur d'eau de l'air de combustion fourni à un générateur de chaleur.

On sait que l'augmentation de la teneur en vapeur d'eau de l'air de combustion fourni à un générateur de chaleur est de nature à accroître le rendement de chauffage.

Aussi, en se référant par exemple au document FR-A 2 555 711, on connaît déjà des chaudières équipées d'un brûleur à gaz alimenté en gaz combustible et en gaz comburant humidifié par l'eau de lavage des gaz brûlés. Mais ces chaudières demeurent compliquées et encombrantes au regard notamment du système prévu pour humidifier l'air comburant et qui de plus exige la présence de pompes et donc la fourniture d'une énergie supplémentaire et indésirable pour entraîner lesdites pompes.

Par ailleurs, on connaît d'après le document DE-A 3 344 917, un dispositif de transfert de vapeur d'eau au travers d'une membrane agencée dans une enceinte et définissant deux chambres dans lesquelles passent des courants individuels de gaz. Toutefois ce document ne préconise pas l'application ou l'adaptation d'un tel dispositif aux chaudières et plus particulièrement aux chaudières à gaz.

Aussi, pour remédier à cette lacune et à ces inconvénients, l'invention propose un système de chauffage compact, économique et spécialement aménagé pour permettre la récupération directe de la vapeur d'eau provenant des gaz brûlés et son recyclage dans l'air de combustion parvenant au brûleur.

A cet effet, l'invention a pour objet un système de chauffage comprenant un brûleur à gaz logé dans une enceinte de chauffe comportant au moins une entrée d'air de combustion et une sortie des gaz brûlés provenant de l'enceinte, caractérisé en ce que l'enceinte contient un séparateur constitué par une pluralité de membranes qui s'étendent parallèlement et verticalement dans ladite enceinte et qui définissent entre elles une série de passages pour les gaz brûlés sortant de l'enceinte, et une autre série de passages pour l'air de.combustion dans ledit séparateur, et en ce que lesdites membranes sont semi-perméables et assurent le passage de la vapeur d'eau des gaz brûlés dans l'air de combustion qui s'écoule à contre-courant des gaz brûlés dans ledit séparateur.

Ainsi, non seulement le rendement sera amélioré du fait de la présence de vapeur d'eau dans l'air de combustion, mais les gaz brûlés ou produits de combustion seront séchés et pourront par exemple être évacués vers l'atmosphère sans provoquer de panache.

Selon une autre caractéristique de l'invention, le séparateur est équipé en partie haute d'un conduit d'évacuation des gaz brûlés soit vers l'atmosphère extérieure soit vers un échangeur de préchauffage de l'air de combustion avant son entrée dans le séparateur.

Selon une autre caractéristique de l'invention, en aval du brûleur à gaz est prévu un échangeur muni d'une conduite de départ et de retour chauffage.

Mais d'autres avantages et caractéristique de l'invention apparaîtront mieux dans la description détaillée qui suit et se réfère aux dessins annexés, donnés uniquement à titre d'exemple, et dans lesquels:

La figure 1 est une vue très schématique d'un système de chauffage illustrant le principe de l'invention, et

La figure 2 est une vue schématique d'un mode de réalisation de système de chauffage conforme à l'invention revendiquée.

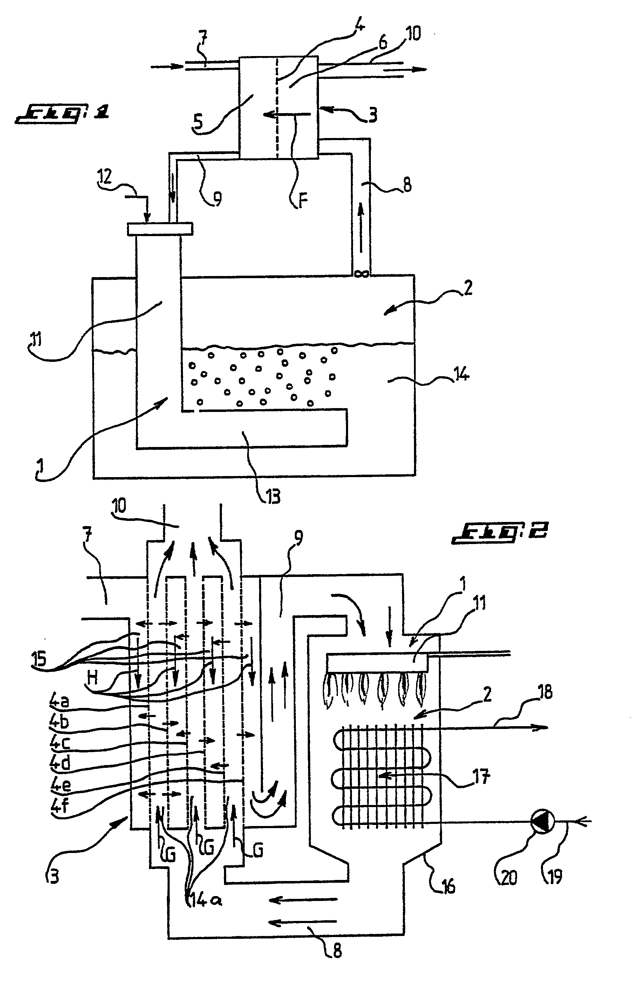

En se reportant à la figure 1, on voit un système de chauffage qui comprend un générateur de chaleur 1 logé dans une enceinte de chauffe 2 à laquelle est associé un séparateur 3 muni d'une membrane semi-perméable 4.

Plus précisément, cette membrane 4 divise le séparateur 3 en deux compartiments ou espaces 5, 6 communiquant respectivement avec une conduite 7 d'entrée d'air de combustion parvenant au générateur 1 et avec une conduite 8 de sortie des gaz brûlés provenant de l'enceinte 2. On a montré en 9 une conduite reliant le compartiment 5 du séparateur 3 au générateur 1, et en 10 une conduite d'évacuation des gaz brûlés vers l'atmosphère extérieure, cette conduite pouvant éventuellement être reliée à un échangeur (non représenté), permettant le préchauffage de l'air de combustion avant son entrée par la conduite 7 dans le séparateur 3.

Le générateur de chaleur 1 est constitué par un brûleur 11 alimenté en gaz par un conduit matérialisé par la flèche 12, et, à ce brûleur 11 est associé un tube diffuseur 13 immergé dans un liquide 14 contenu dans l'enceinte 2. Ainsi, comme cela est bien connu, le liquide 14 sera chauffé par récupération des calories des fumées émanant du système diffuseur 13.

On comprend donc de ce qui précède que les gaz brûlés chargés en vapeur d'eau sortiront par la conduite 8 de l'enceinte 2 pour parvenir dans le compartiment 6 du 35 séparateur 3 et, qu'à ce moment-là, la vapeur d'eau passera au travers de la membrane semi-perméable 4 suivant le sens de la flèche F, de façon à charger en humidité l'air de combustion arrivant par la conduite 7 et parvenant au générateur de chaleur 1 par la conduite 9, ce qui améliorera le rendement de chauffage, comme expliqué plus haut. Quant aux fumées ou gaz brûlés évacués par la conduite 10, ils seront bien entendu en grande partie dépourvus de vapeur d'eau, de sorte que, si ces gaz brûlés sont évacués par une cheminée vers l'atmosphère extérieure, il ne se produira pas de panache ce que l'on cherche généralement à éviter.

Le système de chauffage ou chaudière qui vient d'être décrit présente donc le double avantage d'améliorer le rendement de chauffage et d'éviter la production d'un panache dans l'atmosphère puisqu'il n'y a plus de condensation.

La réalisation de chaudière suivant l'invention et qui est visible sur la figure 2 utilise un séparateur 3 permettant l'enrichissement en vapeur d'eau de l'air de combustion et l'assèchement des gaz brûlés. On a utilisé sur cette figure les mêmes repères que ceux de la figure 1 pour désigner les éléments communs.

Ainsi, on voit en 7 une conduite d'entrée de l'air de combustion aboutissant dans le séparateur 3 et en 9 une conduite acheminant l'air de combustion chargé en vapeur d'eau dans une enceinte 2 contenant le générateur de chaleur 1 qui est ici un simple brûleur à gaz 11. Les gaz brûlés sortent de l'enceinte 2 par une conduite 8 aboutissant au séparateur 3. A la sortie de ce séparateur 3 est prévue une conduite 10 d'évacuation des gaz brûlés, laquelle conduite peut revêtir la forme d'une cheminée ou bien, comme on l'a expliqué à propos 35 de la figure 1, les gaz brûlés peuvent être envoyés dans un échangeur (non représenté) qui permet le préchauffage de l'air de combustion avant son entrée par la conduite 7 dans le séparateur 3.

Ce séparateur comporte une pluralité de membranes semi-perméables 4a, 4b, 4c, 4d, 4e et 4f qui s'étendent parallèlement sur sensiblement toute la hauteur du séparateur 3 et définissant entre elles une série de passages alternés pour l'air de combustion et pour les gaz brûlés.

Plus précisément, et comme il apparaît clairement sur la figure 2, les membranes semi-perméables 4a à 4f définissent dans le séparateur 3 des passages 14a pour les gaz de combustion sortant de l'enceinte 2, et des passages 15 pour l'air de combustion dans ledit séparateur. Les passages 15 correspondent en quelque sorte à l'espace 5 défini précédemment à propos de la figure 1, tandis que les passages 14 correspondent à l'espace 6 défini précédemment.

La chaudière qui vient d'être décrite comprend, comme connu en soi, un corps de chauffe 16 contenant un échangeur 17 qui est évidemment situé en aval du brûleur à gaz 11. On a montré schématiquement en 18 une conduite de départ chauffage et en 19 une conduite de retour chauffage qui peut être équipée d'une pompe 20. Mais le fonctionnement de cette chaudière sera brièvement expliqué dans ce qui suit.

Les produits de combustion sortant de l'échangeur 17 par la conduite 8 parviennent au séparateur 3 et le traversent en s'écoulant suivant le sens des flèches repérées en G. L'air de combustion arrivant par la conduite 7 s'écoule dans le séparateur 3 par les passages 15, à contre courant des produits de combustion ou gaz brûlés, suivant les flèches repérées en H.

Dans ces conditions, les membranes semi-perméables 4a à 4f laisseront passer la vapeur d'eau des gaz brûlés dans les passages 15 pour l'air de combustion qui par conséquent s'enrichira en vapeur d'eau. En effet, et comme on le comprend, le transfert dans l'air de combustion de la vapeur d'eau contenue dans les produits de combustion sera permis par le fait que l'une des faces de chaque membrane 4a à 4f est en contact avec les produits de combustion, tandis que l'autre face de chaque membrane 4a à 4f est en contact avec l'air de combustion acheminé vers le brûleur 11 de la chaudière. Ce transfert est matérialisé par des petites flèches transversales sur la figure 2.

On a donc réalisé suivant l'invention un sytème de chauffage permettant un enrichissement en eau de l'air de combustion et, par voie de conséquence, un assèchement des gaz brûlés sortant de la chaudière, ce qui limite les risques de condensation dans la cheminée d'évacuation des fumées et donc le panache dans l'atmosphère.

Par ailleurs, on notera que le principe selon cette invention et consistant à associer un séparateur à membranes semi-perméables à une chaudière peut s'appliquer à des chaudières utilisant des équipements très divers et destinées à des usages quelconques. Dans tous les cas, on obtiendra une élévation de la température de rosée des produits de combustion et donc une amélioration du rendement, de même que l'on diminuera avantageusement la condensation au niveau de l'évacuation des fumées de la chaudière.

## Revendications

1. Système de chauffage comprenant un brûleur à gaz (11) logé dans une enceinte de chauffe (2) comportant au moins une entrée (7) d'air de combustion et une sortie (8) des gaz brûlés provenant de l'enceinte (2), caractérisé en ce que l'enceinte (2) contient un séparateur (3) constitué par une pluralité de membranes (4a–4f) qui s'étendent parallèlement et verticalement dans ladite enceinte et qui définissent entre elles une série de passages (14a) pour les gaz brûlés sortant de l'enceinte, et une autre série de passage (15) pour l'air de combustion dans ledit séparateur, et en ce que lesdites membranes sont semi-perméables et assurent le passage de la vapeur d'eau des gaz brûlés dans l'air de combustion qui s'écoule à contre-courant des gaz brûlés dans ledit séparateur.

2. Système de chauffage selon la revendication 1, caractérisé en ce que le séparateur (3) est équipé en partie haute d'un conduit d'évacuation (10) des gaz brûlés soit vers l'atmosphère extérieure soit vers un échangeur de préchauffage de l'air de combustion avant son entrée dans ledit séparateur.

3. Système de chauffage selon la revendication 1 ou 2, caractérisé en ce qu'en aval du brûleur à gaz (11) est prévu un échangeur (17) muni d'une conduite de départ et de retour chauffage (18, 19).

## Patentansprüche

1. Heizeinrichtung mit einem in einem geschlossenen Heizraum (2) untergebrachten und wenigstens einen Verbrennungslufteintritt (7) und einen Austritt (8) für die aus dem umschlossenen Raum (2) ankommenden verbrannten Gase aufweisenden Gasbrenner (11), dadurch gekennzeichnet, daß der umschlossene Raum (2) einen aus einer Vielzahl von Membranen (4a–4f) bestehenden Abscheider (3) enthält, welche sich parallel und lotrecht zu dem besagten umschlossenen Raum erstrecken und die untereinander eine Reihe von Durchgängen (14a) für die aus dem umschlossenen Raum herausfließenden verbrannten Gase und eine andere Reihe von Durchgängen (15) für die Verbrennungsluft in dem besagten Abscheider bilden, und daß die besagten Membrane halbdurchlässig sind und das Durchfließen des Wasserdampfes der verbrannten Gase in der Verbrennungsluft, die im Gegenstrom zu den verbrannten Gasen in dem besagten Abscheider fließt, gewährleisten.

2. Heizeinrichtung nach Anspruch 1, dadurch gekennzeichnet, daß der Abscheider (3) in seinem oberen Teil mit einer Leitung (10) zur Abführung der verbrannten Gase entweder zu der äußeren Luft oder zu einem Tauscher für die Vorwärmung der Verbrennungsluft vor deren Eintritt in den besagten Abscheider ausgeröstet ist.

3. Heizeinrichtung nach Anspruch 1 oder 2, dadurch gekennzeichnet, daß stromabwärts von dem Gasbrenner (11) ein mit einer Heizungsabgangs- und -rückführungsleitung (18, 19) versehener Tauscher (17) vorgesehen ist.

**Claims**

1. Heating system comprising a gas burner (11) housed in a heating enclosure (2) comprising at least one combustion air inlet (7) and an outlet (8) for the burnt gases coming from the enclosure (2), characterized in that the enclosure (2) contains a separator (3) consisting of a plurality of membranes (4a–4f) which extend in parallel and vertical relationship within the said enclosure and which define between them a series of passage-ways (14a) for the burnt gases issuing from the enclosure and another series of passage-ways (15) for the combustion air within the said separator and in that the said membranes are semipermeable and provide for the passage of the steam of the burnt gases in the combustion air which flows in counter-current relationship with the burnt gases within the said separator.

2. Heating system according to claim 1, characterized in that the separator (3) is fitted at the upper part with a duct (10) for discharging the burnt gases either towards the outer atmosphere or towards an exchanger for pre-heating the combustion air before its intake into the said separator.

3. Heating system according to claim 1 or 2, characterized in that downstream of the gas burner (11) is provided an exchanger (17) fitted with a heating feed and a heating return duct (18, 19).

FIG.1

FIG.2